# EUROPEAN PATENT SPECIFICATION

(11) **EP 3 680 894 B1**
(45) Date of publication and mention of the grant of the patent: **20.03.2024**
(21) Application number: 19215676.8
(22) Date of filing: 12.12.2019
(51) Int. Cl.: G10L 15/16, G10L 15/26, G10L 15/28

(54) **REAL-TIME SPEECH RECOGNITION METHOD AND APPARATUS BASED ON TRUNCATED ATTENTION, DEVICE AND COMPUTER-READABLE STORAGE MEDIUM**
VERFAHREN UND VORRICHTUNG ZUR ECHTZEIT-SPRACHERKENNUNG BASIEREND AUF GEKÜRZTER AUFMERKSAMKEIT, VORRICHTUNG UND COMPUTERLESBARES SPEICHERMEDIUM
PROCÉDÉ ET APPAREIL DE RECONNAISSANCE VOCALE EN TEMPS RÉEL SUR LA BASE D'UNE ATTENTION TRONQUÉE, DISPOSITIF ET SUPPORT D'ENREGISTREMENT LISIBLE PAR ORDINATEUR

(30) Priority: 08.01.2019 CN 201910016861
(43) Date of publication of application: 15.07.2020
(73) Proprietor: Baidu Online Network Technology (Beijing) Co., Ltd., Beijing 100085 (CN)
(72) Inventor: FU, Xiaoyin, Beijing, 100085 (CN); BAI, Jinfeng, Beijing, 100085 (CN); CHEN, Zhijie, Beijing, 100085 (CN); LIANG, Mingxin, Beijing, 100085 (CN); CHEN, Xu, Beijing, 100085 (CN); JIA, Lei, Beijing, 100085 (CN)
(74) Representative: advotec.

(56) References cited:
- CHUNG-CHENG CHIU ET AL: "Monotonic Chunkwise Attention", ARXIV.ORG, CORNELL UNIVERSITY LIBRARY, 201 OLIN LIBRARY CORNELL UNIVERSITY ITHACA, NY 14853, 14 December 2017 (2017-12-14), XP081320249,
- Colin Raffel ET AL: "Online and Linear-Time Attention by Enforcing Monotonic Alignments", , 3 April 2017 (2017-04-03), XP055473250, Retrieved from the Internet: URL:https://arxiv.org/pdf/1704.00784.pdf [retrieved on 2020-05-27]
- ZHE YUAN ET AL: "An improved hybrid CTC-Attention model for speech recognition", ARXIV.ORG, CORNELL UNIVERSITY LIBRARY, 201 OLIN LIBRARY CORNELL UNIVERSITY ITHACA, NY 14853, 29 October 2018 (2018-10-29), XP081428643,

## Description

### FIELD

Embodiments of the present disclosure relate generally to a field of speech recognition technologies, and more particularly, to a real-time speech recognition method and apparatus based on truncated attention, a device and a computer-readable storage medium.

### BACKGROUND

Speech recognition refers to a process of converting speech signals into corresponding texts through a computer, and is one of main ways of realizing a human and machine interaction. In recent years, with a wide application of a deep learning technology in a field of speech recognition, an accuracy of the speech recognition is greatly improved. In addition, due to an increasing popularity of smart devices, more and more occasions use the speech recognition. For example, a speech recognition technology has been widely used in various situations such as a speech input, a speech dialing, a vehicle navigation, and the like. The speech recognition technology is combined with technologies such as a natural language processing, a speech synthesis and the like, and more complex applications such as an intelligent sound box, a conference simultaneous interpretation, intelligent customer service assistants and the like may be generated. The accuracy of the speech recognition directly influences use experience of users of speech-related products, so that with a continuous enrichment of usage scenarios of the speech recognition, higher requirements are put forward on the accuracy of speech recognition.

A real-time speech recognition is to recognize each segment of a received continuous speech, so that a recognition result can be obtained in real time instead of starting the recognition process after all the speech is input. In an online continuous speech recognition of large-scale vocabulary, key factors affecting a system performance are a recognition accuracy and a response speed of the system. For example, in a scenario where a user desires to see that the recognition result is presented in real time while speaking, the speech recognition system is required to decode the speech signal and output the recognition result in a timely and quick manner while maintaining a high recognition rate. If the recognition is started after the user finishes inputting the speech, the use experience of the user is seriously influenced, and a speech interaction is not smooth.

CHUNG-CHENG CHIU ET AL: "Monotonic Chunkwise Attention", ARXIV.ORG, CORNELL UNIVERSITY LIBRARY, 201 OLIN LIBRARY CORNELL UNIVERSITY ITHACA, NY 14853, 14 December 2017 (2017-12-14) discloses monotonic chunkwise attention.

Colin Raffel ET AL: "Online and Linear-Time Attention by Enforcing Monotonic Alignments", 3 April 2017 (2017-04-03), Retrieved from the Internet: URL:https://arxiv.org/pdf/1704.00784.pdf discloses online and linear-time attention by enforcing monotonic alignments.

ZHE YUAN ET AL: "An improved hybrid CTC-Attention model for speech recognition", ARXIV.ORG, CORNELL UNIVERSITY LIBRARY, 201 OLIN LIBRARY CORNELL UNIVERSITY ITHACA, NY 14853, 29 October 2018 (2018-10-29) discloses an improved hybrid CTC-attention model for speech recognition.

### SUMMARY

According to example embodiments of the present disclosure, a real-time speech recognition method and apparatus based on truncated attention, a device and a computer-readable storage medium are provided.

A first aspect of the present disclosure provides the real-time speech recognition method based on truncated attention. The method includes obtaining truncated information for truncating a feature sequence of a speech signal based on the speech signal; truncating the feature sequence into a plurality of subsequences based on the truncated information; and obtaining a real-time recognition result through an attention mechanism for a subsequence in the plurality of subsequences; obtaining the truncated information for truncating the feature sequence of the speech signal comprises: obtaining spike information related to the speech signal by performing a connectionist temporal classification (CTC) process on the feature sequence; and determining the truncated information based on the obtained spike information, wherein truncating the feature sequence into the plurality of subsequences comprises: for each spike in the spike information, selecting from the feature sequence a subsequence corresponding to a predetermined number of spikes adjacent to the spike, the predetermined number of spikes comprising a first number of spikes before the spike and a second number of spikes after the spike.

A second aspect of the present disclosure provides the real-time speech recognition apparatus based on truncated attention. The apparatus includes: a truncated information obtaining module, configured to obtain truncated information for truncating a feature sequence of a speech signal based on the speech signal; a feature sequence truncation module, configured to truncate the feature sequence into a plurality of subsequences based on the truncated information; and a recognition result obtaining module, configured to obtain a real-time recognition result through an attention mechanism for a subsequence in the plurality of subsequences; the truncated information obtaining module comprises: a spike information obtaining module, configured to obtain spike information related to the speech signal by performing a connectionist temporal classification (CTC) process on the feature sequence; and a truncated information determination module, configured to determine the truncated information based on the obtained spike information, wherein the feature sequence truncation module comprises: a subsequence selection module, configured to, for each spike in the spike information, select from the feature sequence a subsequence corresponding to a predetermined number of spikes adj acent to the spike, the predetermined number of spikes comprising a first number of spikes before the spike and a second number of spikes after the spike.

A third aspect of the present disclosure provides the electronic device. The electronic device includes one or more processors and a storage means configured to storage one or more programs which, when executed by said one or more processors, cause the electronic device to carry out the method or process according to embodiments of the present disclosure.

A fourth aspect of the present disclosure provides the computer-readable storage medium, having stored thereon a computer program which, when executed by a processor, implements the method or process according to embodiments of the present disclosure.

It should be understood that, contents described in the summary is not intended to limit key or important features of embodiments of the present disclosure, and is also not intended to limit the scope of the present disclosure. Other features of the present disclosure will become more readily appreciated from the following descriptions.

### BRIEF DESCRIPTION OF THE DRAWINGS

The above and other features, advantages and aspects of embodiments of the present disclosure will become apparent from the following descriptions made with reference to the accompanying drawings. The same or similar numbers in different drawings represent the same or similar elements unless otherwise represented.
FIG. 1 illustrates a schematic diagram of a conventional speech recognition process;
FIG. 2 illustrates a schematic diagram of an example scenario of a real-time speech recognition according to embodiments of the present disclosure;
FIG. 3 illustrates a flow chart of a real-time speech recognition method based on truncated attention according to embodiments of the present disclosure;
FIG. 4 illustrates a schematic diagram of a real-time speech recognition process based on truncated attention according to embodiments of the present disclosure;
FIG. 5 illustrates a schematic diagram of an example architecture of a streaming multi-layer truncated attention (SMLTA) model based on connectionist temporal classification (CTC) spike information according to embodiments of the present disclosure;
FIG. 6 illustrates a schematic diagram of an example operating principle of an SMLTA model based on CTC spike information according to embodiments of the present disclosure;
FIG. 7 illustrates a block diagram of a real-time speech recognition apparatus based on truncated attention according to embodiments of the present disclosure; and
FIG. 8 illustrates a block diagram of an electronic device capable of implementing embodiments of the present disclosure.

### DETAILED DESCRIPTION

Embodiments of the present disclosure are described in detail with reference to the accompanying drawings below. Although some embodiments of present disclosure are shown in the accompanying drawings, it should be understood that, the present disclosure may be implemented in various forms and should not be interpreted as limited to the embodiments described herein, but rather provided for a more thorough and complete understanding of the present disclosure. It should be understood that, embodiments described herein with reference to drawings are explanatory, and are not construed to limit the scope of the present disclosure.

In describing embodiments of the present disclosure, the term "include" and its equivalents should be construed as open-ended inclusions, i.e., "including, but not limited to". The term "based on" is to be understood as "based at least in part on". The term "one embodiment" or "the embodiment" should be understood as "at least one embodiment". The term "some embodiments" should be understood as "at least some embodiments". Other explicit and implicit definitions may also be included below.

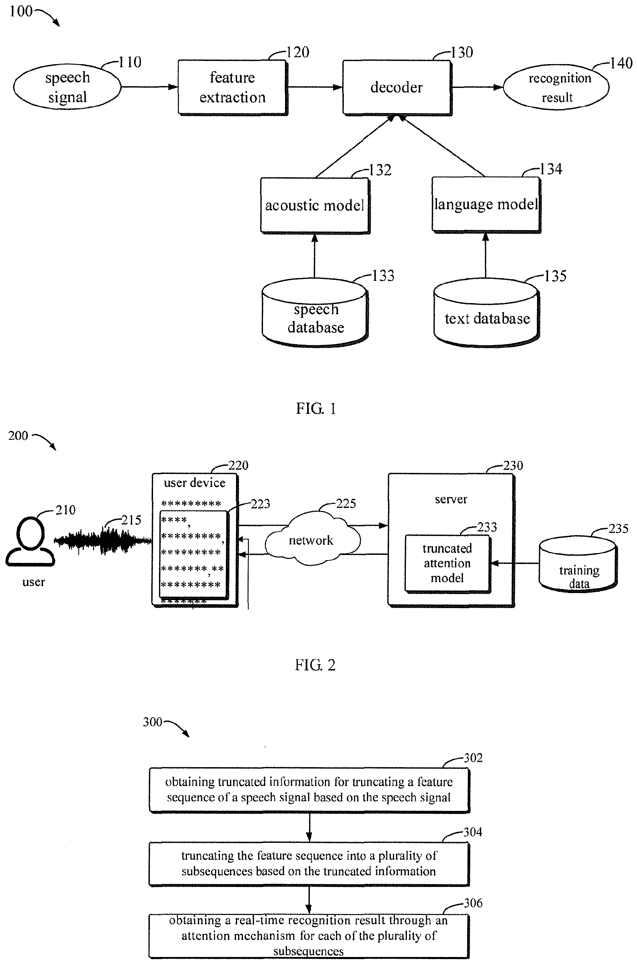

A conventional speech recognition system mainly includes three parts, which are an acoustic model, a language model and a decoder, as illustrated in FIG. 1, which shows a schematic diagram of a conventional speech recognition process 100. After an acquired speech signal 110 is obtained, the speech signal 110 is first subjected to a signal processing and a feature extraction at block 120, features are extracted from the input speech signal 110 for processing by the acoustic model 132. The system further includes some signal processing technologies to reduce effects of ambient noise or other factors on the features.

Referring to FIG. 1, after the feature extraction, the extracted features are input to a decoder 130 which processes the features to output a recognition result 140. The decoder 130 finds a word sequence of the speech signal with a maximum output probability according to the acoustic model 132 and the language model 134. The acoustic model 132 implements a speech-to-syllable conversion and the language model 134 implements a syllable-to-text conversion. The acoustic model 132 models the speech signal using information such as acoustics characteristics, phonetics characteristics, environmental characteristics, and speaker-specific accents. For example, the acoustic model 132 may model using a Hidden Markov Model (HMM) to represent a posterior probability of a feature vector sequence to a state sequence. The language model 134 is used to model the language. Typically, a statistical N-Gram may be used, i.e., a probability of N words occurring before and after a specific word is counted. As illustrated in FIG. 1, the acoustic model 132 may be trained and/or operated based on a speech database 133, and the language model 134 may be trained and/or operated based on a text database 135.

Generally, in order to reduce complexity and computation amount of the model, the acoustic model 132 and the language model 134 are respectively trained and optimized as two separate models. As illustrated in FIG. 1, the speech recognition system needs to be constructed by a coordination of a plurality of modules, such as modules of feature extraction, acoustic model training, language model training, and decoder optimization. In particular, an acoustic model training typically requires personnel with specialized acoustic background knowledge to develop and optimize, which increases the complexity and labor cost of the speech recognition system.

With a continuous development of a neural network technology, each module of the acoustic model is gradually replaced by the neural network, so that the complexity of the acoustic model is simplified, a difficulty in developing and debugging the model is reduced, and a performance of the speech recognition system is obviously improved. For example, an acoustic model of a Deep Neural Network (DNN) + HMM appears. Then, on the basis of the structure, the acoustic model further introduces a deep convolution network (CNN), a gate-based recurrent neural network (GRU), a long-short time memory network (LSTM) and other network structures to replace the DNN model, which improves a modeling accuracy of the neural network model obviously.

A CTC (connectionist temporal classification) model, which is an end-to-end model, is used for the speech recognition of large-scale vocabulary, and a structure of an acoustic model mixed with DNN + HMM is completely replaced by a uniform neural network structure, thereby greatly simplifying the structure and training difficulty of the acoustic model and further improving the accuracy of the speech recognition system.

However, the inventor of the present disclosure has recognized that the CTC model suffers from several drawbacks. (1) Although the CTC model belongs to the end-to-end model, the CTC model still requires an independence assumption that an output sequence distribution satisfies certain conditions. The independence assumption causes that the CTC model may not effectively utilize information of the language model for modeling in the process of training the acoustic model. When the input speech signal has certain environmental noise or a low signal intensity, the speech recognition system is difficult to effectively distinguish input audio features by only depending on acoustic information, so that a recognition performance is easily reduced. (2) The CTC model is easy to generate a certain proportion of insertion and deletion errors, and although the errors may be relieved to a certain extent by elaborately designing weights of the language model during decoding, a problem of insufficient modeling capability of the CTC model may not be fundamentally solved.

The attention model is an extension to an encoder-decoder model that may boost an effect of prediction over a longer sequence. Firstly, an input audio feature is encoded by using a GRU or LSTM model to obtain implicit features, then different parts of the implicit features are assigned with corresponding weights through the attention model, and finally the decoder outputs corresponding texts according to different modeling granularities. This way of joint modeling of the acoustic model and the language model may further simplify the complexity of the speech recognition system.

However, the inventor of the present disclosure has recognized that the attention model still suffers from the several drawbacks. (1) The traditional attention model may not realize a real-time speech recognition. In an online speech interaction product service, a speech is uploaded to a server from a user equipment segment by segment. When each segment comes, a decoding of a current segment is required to be carried out, so that the decoding may be carried out in parallel with a transmission process. After the user speaks, the time for waiting for the recognition result is the decoding time of a last packet, and the process is called as a streaming decoding (also called as "a real-time recognition"). However, in the traditional attention model, the recognition system may start decoding only after all speech signals are input, and the time for the user to wait is the decoding time of the whole speech. Therefore, the model based on a whole sentence attention mechanism may cause long waiting time of a user in a speech interaction system and may not carry out a real-time speech interaction, such that the model may not be practically used in speech interaction industrial products. (2) The traditional attention model has a poor modeling effect on a long sentence, so that a recognition accuracy is low. The attention model based on a whole sentence needs an attention modeling on whole sentence information. A maximum length of the sentence information of the speech recognition may reach thousands of frames according to the length of a speech frame. An essence of the attention modeling is to remove redundant features and select most core essential features for a modeling unit. If a range of alternative features is too large (for example, the traditional attention model needs to perform the attention modeling on a range of thousands of frames), meanwhile, a convergence of deep learning is not a standard convex optimization, it is difficult for the attention learning process to converge to a core characteristic frame which may really describe the current modeling unit, so that the defects that the modeling capability of the attention model is reduced and the modeling effect on the long sentence is poor are caused.

Improvements to the attention model have emerged such as segmenting the input feature by a heuristic fixed length. However, the fixed-length segmentation does not consider an input audio feature sequence itself, easily excludes an effective feature sequence, and is difficult to adapt to a situation that a speech speed and a pause of speech recognition are continuously changed. Thus, while this improvement enables the real-time speech recognition partly, it sacrifices the accuracy of speech recognition, resulting in lower recognition accuracy than a conventional attention model based on whole sentence modeling. That is, the conventional speech recognition technology may not perform the real-time speech recognition, or has a low recognition accuracy, so that an accurate real-time speech recognition may not be realized.

In order to solve one or more of above problems in the related art, embodiments of the present disclosure propose a real-time speech recognition method based on truncated attention, which provides a concept of guiding attention model learning using truncated information. According to embodiments of the present disclosure, the truncated information determined according to the speech signal is introduced into the traditional attention model, so that the attention model may be guided to respectively carry out the attention modeling for each truncation, thereby not only realizing a continuous speech recognition, but also ensuring a high accuracy. Further, alternatively, the truncated information may be based on spike information of the speech signal obtained by the CTC process. In addition, alternatively, a dual-head structure consisting of the CTC and the attention model proposed by some embodiments of the present disclosure may ensure that the computation amount of the real-time speech recognition process is small, and a multi-layer attention model proposed by some embodiments of the present disclosure may further improve the accuracy of speech recognition. Some example implementations of the present disclosure will be described in detail below with reference to FIGs. 2-8.

FIG. 2 illustrates a schematic diagram of a scenario 200 of a real-time speech recognition according to embodiments of the present disclosure. It should be understood that the scenario 200 is merely an example scenario in which embodiments of the present disclosure may be implemented, and is not intended to limit the scope of the present disclosure.

As illustrated in FIG. 2, in the scenario 200, a user 210 is speaking to his user device 220, and a speech 215 (i.e., sound) generated by the user 210 is collected by the user device 220, e.g., the speech 215 may be collected by a sound collecting device (such as a microphone) of the user device 220. The user device 220 may be any electronic device capable of collecting speech signals including, but not limited to, a smartphone, a tablet computer, a desktop computer, a notebook computer, a smart wearable device (such as a smart watch, smart glasses), a navigation device, a multimedia player device, an educational device, a gaming device, a smart speaker, and the like.

The user device 220, in collecting the speech 215, may send the speech 215 in segments via a network 225 to a server 230, which includes a truncated attention model 233 for the speech recognition according to embodiments of the present disclosure (in some embodiments of the present disclosure, the truncated attention model 233 may be a streaming multi-layer truncated attention (SMLTA) model based on CTC spike information). The network 225 may be any wired network, wireless network, or a combination of the wired and wireless networks. The truncated attention model 233 may be trained by training data 235 such that it may enable a real-time and accurate speech recognition, and after the recognition is completed, the recognition result may be transmitted to the user device 220 via the network 225.

The user device 220 may display the recognition result in real time via its display 223. Because embodiments of the present disclosure may recognize the speech in real time, the recognition result displayed on the display 223 may be also dynamically changed with a continuous generation of the speech 215, so that the user may know the recognized result in real time, thus improving a user experience. In some embodiments, the user device 220 may not include the display 223, but instead the user device 220 may output the recognition result via its audio output device (e.g., speaker). In further embodiments, the server 230 may perform further actions directly based on the recognition result without transmitting the recognition result of the speech to user device 220.

It should be understood that, although the truncated attention model 233 is illustrated in the scenario 200 of FIG. 2 as being deployed on the server 230 side remote from the user device 220, the truncated attention model 233 may also be deployed locally at the user device 220. Alternatively, it is also possible to deploy a part of the truncated attention model 233 locally at the user device 220, another part at the server 230 side, or to deploy the truncated attention model 233 distributedly at a plurality of servers. Embodiments of the present disclosure do not limit a deployment manner and a location of the truncated attention model 233.

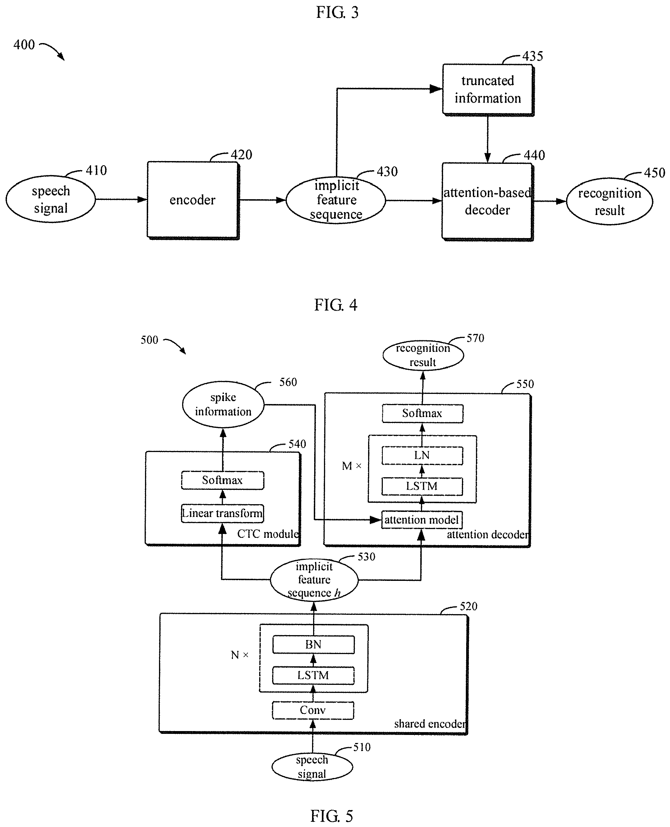

FIG. 3 illustrates a flow chart of a real-time speech recognition method 300 based on truncated attention according to embodiments of the present disclosure. It should be understood that the method 300 may be performed by the server 230 or the user device 220 described above with reference to FIG. 2, or a combination thereof. To facilitate a clear description of the method 300, the method 300 is described herein with reference to a real-time speech recognition process 400 based on truncated attention in FIG. 4.

At block 302, truncated information for truncating a feature sequence of a speech signal is obtained based on the speech signal. For example, the feature sequence may be obtained by encoding the speech signal. For example, as illustrated in FIG. 4, after collecting the speech signal 410 from the user, the encoder 420 may encode the collected speech signal 410 into an implicit feature sequence 430 and then determine the truncated information 435 based on the implicit feature sequence 430. Therefore, in the embodiment of the present disclosure, the truncated information calculated according to the features of the input speech signal is used, so that the subsequent truncation does not affect the accuracy of speech recognition, thereby not only realizing the real-time recognition of the speech signal, but also ensuring the accuracy of the speech recognition.

The truncated information is spike information related to the speech signal obtained by performing a connectionist temporal classification (CTC) process on the feature sequence. The CTC process may output a sequence of spikes, which may be separated by blanks, wherein a spike may represent a syllable or a group of phones, such as a combination of high frequency phones.

At block 304, the feature sequence is truncated into a plurality of subsequences based on the truncated information. For example, as illustrated in FIG. 4, the attention-based decoder 440 may truncate the implicit feature sequence 430 into individual implicit feature subsequences according to the truncated information 435, where the implicit feature sequence may be a vector representing features of the speech signal. For example, the implicit feature sequence may refer to a feature vector that is not directly observable but may be determined by an observable variable. Unlike the related art in which a fixed-length truncation mode is used, embodiments of the present disclosure performs the feature truncation using the truncated information determined according to the speech signal, avoiding an exclusion of an effective feature portion, thereby enabling the high accuracy.

At block 306, for each of the plurality of subsequences, a real-time recognition result is obtained through an attention mechanism. For example, the speech decoder 440 obtains the recognition result 450 using the attention model for each implicit feature subsequence generated by the truncation. The attention model enables a weighted feature selection and assigns respective weights to different portions of the implicit feature. Any model and/or algorithm based the attention mechanism now known or to be developed may be used in conjunction with embodiments of the present disclosure. Therefore, in the embodiment of the present disclosure, the attention model may be guided to perform the attention modeling for the each truncation separately by introducing the truncated information determined according to the speech signal into the conventional attention model, thus not only realizing the continuous speech recognition, but also ensuring the high accuracy.

In some embodiments, after the implicit feature sequence is truncated into the plurality of subsequences, a first attention modeling of the attention model may be performed on a first subsequence in the plurality of subsequences and a second attention modeling of the attention model may be performed on a second subsequence in the plurality of subsequences. The first attention modeling is different from the second attention modeling. That is, with embodiments of the present disclosure, the attention modeling of the attention model used for truncating locally may be performed.

FIG. 5 shows a schematic diagram of an architecture 500 of an SMLTA model based on the CTC spike information according to embodiments of the present disclosure. As illustrated in FIG. 5, the architecture 500 includes essentially three parts: a shared decoder 520 configured to encode an input speech signal 510 into an implicit feature sequence 530 (i.e., an implicit feature sequence h); a CTC module 540 configured to determine spike information 560 based on the implicit feature sequence 530; and an attention decoder 550 configured to obtain a real-time recognition result 570 based on the implicit feature sequence 530 and the spike information 560. In the architecture 500 illustrated in FIG. 5, the shared encoder 520 is shared by the CTC module 540 and the attention decoder 550, forming a "dual-head structure" consisting of the CTC module 540 and the attention decoder 550. Since the main computation amount in the architecture 500 focuses on the shared encoder 520 and the attention decoder 550, the architecture 500 according to embodiments of the present disclosure hardly increases the computation amount of the entire architecture (even though the computation amount increases, the increase is particularly small and may be almost ignored) compared to the conventional attention model, but may provide both a CTC output (i.e., the spike information 560) and an attention output (i.e., a recognition result 570), thus a problem of large-scale industrial deployment of the architecture 500 of embodiments of the present disclosure may be well solved. In contrast, for the traditional method, if the two models are combined in the product, the computation amount on line may be doubled, thereby causing too high cost and being incapable of a large-scale industrial application.

As illustrated in FIG. 5, the shared encoder 520 includes one rolling layer (Conv), N LSTM layers, and a batch normalization (BN) layer, where N may be a positive integer (e.g., 5, etc.), and the LSTM may be an unidirectional LSTM. For a given input speech signal, the shared encoder 520 first encodes the speech signal, to obtain the corresponding implicit feature sequence 530. In some embodiments, the speech signal 510 may be subject to the feature-extraction and then be input to the shared encoder 520 as a model input x. It should be understood that although an internal hierarchy of shared encoder 520 is illustrated in FIG. 5, encoders of other structures may be used in conjunction with embodiments of the present disclosure.

The CTC module 540 contains a Linear transform (Linear) layer and a normalization (Softmax) layer that obtains a description of the spikes of the input implicit feature sequence 530 using a CTC training guideline to generate the CTC output including the spike information 560, and then the spike information 560 is passed to the attention decoder 550 for using in truncating implicit feature sequence 530 into multiple subsequences.

With reference to FIG. 5 continuously, the attention decoder 550 includes one attention model layer, M LSTM layers and Layer Normalization (LN) layers, and one Softmax layer, where M may be a positive integer (e.g., 2, etc.), and the LSTM may be an unidirectional LSTM. The attention decoder 550 may truncate the implicit feature sequence 530 into successive subsequences according to the received implicit feature sequence 530 and the spike information 560. The attention decoder 550 filters the truncated subsequences through the attention mechanism, and finally obtains a corresponding output probability distribution. Since the shared encoder 520 and the decoder 550 use the unidirectional LSTM as a basic network structure and this way of truncating the implicit feature sequence into the subsequences only relies on history information of the implicit feature, the speech recognition system may decode the audio signal in real time while the audio signal is input, instead of having to wait until the entire audio signal is input and then start decoding, thereby realizing the real-time speech recognition. Although the internal hierarchy of the attention decoder 550 is illustrated in FIG. 5, attention decoders of other structures may also be used in conjunction with embodiments of the present disclosure.

In a compact CTC and an attention-integrated STMLA model illustrated in FIG. 5, both a head of the CTC module 540 and a head of the attention decoder 550 are owned, and the training may be performed with the two heads. The head of the CTC module 540 is trained with a CTC loss function and the head of the attention decoder 550 is trained with a cross entropy loss function. The two loss functions are connected by a linear difference weight, i.e. the two loss functions have their respective weights. The model has the same online computation amount as a model, but may provide two kinds of information including information on the CTC and information on the attention, so that the model may be industrially deployed on a large scale.

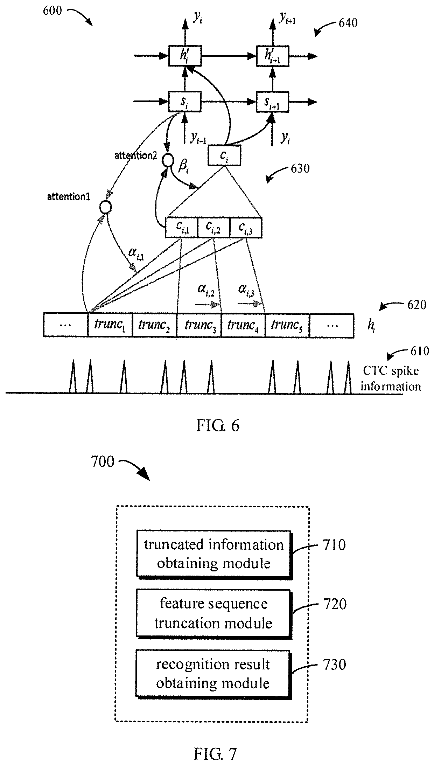

Because the spike information output by the CTC module has certain insertion and deletion errors, the errors easily cause an inaccuracy of a subsequence boundary of the implicit feature sequence obtained by the truncation, and further influence the recognition performance of the speech recognition system. To mitigate a bias due to the insertion and deletion errors of the CTC module, embodiments of the present disclosure also provide a method of progressive filtering the truncated subsequences based on the multi-layer attention structure, which outputs a final probability distribution through the LSTM model of the attention decoder. For example, FIG. 6 illustrates a schematic diagram 600 of an operating principle of the SMLTA model based on a two-layer attention structure according to embodiments of the present disclosure.

As illustrated in FIG. 6, using the spike information 610 of the CTC, the implicit feature sequence 620 may be truncated into a plurality of feature subsequences, where *trunc* is a basic unit of the truncation, and one *trunc* may represent the feature portion of the implicit feature sequence 620 corresponding to one spike. In some embodiments, for each spike (which may represent a combination of a syllable and high frequency phonemes), the feature subsequence corresponding to a predetermined number of spikes adjacent to the spike may be selected as the truncation, the predetermined number of spikes including a first number of spikes before the spike and a second number of spikes after the spike. The subsequence may be the feature portion corresponding to the spikes. In general, if there are enough spikes before and after a certain spike in temporal, a sum of the first number and the second number is equal to the predetermined number. Of course, if there is not enough spikes (for example, first number of spikes) before the peak, then all spikes before the peak are selected; likewise, if there is not enough spikes (for example, second number of spikes) after the spike, all spikes after the spike are selected.

A two-layer attention modeling is performed as indicated by an arrow 630. For example, for an ith spike, a plurality of different feature vectors (*c_{i,1}, c_{i,2}, c_{i,3},* respectively, in the example of FIG. 6, which have corresponding attention vectors *α_{i,1}, α_{i,2}, α_{i,3},* respectively)) may be determined by a first-layer attention mechanism (e.g., attention 1 in FIG. 6) based on a plurality of overlapped subsequences in the implicit feature sequence 620 (e.g., 3 subsequences in the example of FIG. 6, *trunc₁* to *trunc₂, trunc₁* to *trunc₃,* and *trunc₁* to *trunc₄,* respectively). The context feature vectors (*cᵢ*, which have corresponding attention vectors *βᵢ*) are then further determined through filtering by a second layer attention mechanism (e.g., attention 2 in FIG. 6) based on the plurality of determined feature vectors (i.e., *c_{i,1}, c_{i,2}, c_{i,3},*)*.* It should be understood that although the generation of 3 feature vectors *c_{i,1}, c_{i,2}, c_{i,3},* is illustrated in FIG. 6, other numbers of feature vectors are possible, which may depend on the accuracy and decoding hard delay time, and embodiments of the present disclosure are not limited by the number of vectors.

Again, with reference to FIG. 6, next, a decoding process of the decoder is performed, as indicated by an arrow 640, the context feature vector *cᵢ* is input to the decoder (e.g., RNN, LSTM, or GRU, etc.) to output a recognition result *yᵢ*, where *sᵢ* in FIG. 6 represents an output state and *h*'*ᵢ* represents an implicit state. In this way, the insertion and deletion errors of the CTC may be effectively solved through the two-layer attention structure, and a speech recognition performance of the SMLTA model is remarkably improved.

According to embodiments of the present disclosure, a modeling method for providing the truncated information for the attention model by utilizing the CTC spike information not only solves a problem of poor modeling accuracy of the traditional attention model on the long sentence, but also meets a requirement of the attention modeling technology for streaming decoding of the real-time speech recognition for the first time in the industry, and realizes a first high-accuracy attention model used for streaming speech service in the industry worldwide. Compared with a best speech recognition system based on the CTC model at present, a recognition error rate of the SMLTA model based on the CTC spike information according to embodiments of the present disclosure is reduced by more than 15% .

Therefore, according to some embodiments of the present disclosure, the end-to-end real-time speech recognition method based on truncated attention is proposed, in which context-free syllables are used as a basic acoustic modeling unit, and through a joint modeling method of the CTC and the attention, first, the position information of the implicit feature sequence truncation is obtained by using the spike information of the CTC, and then an attention modeling technology is introduced to implement the end-to-end speech recognition method. According to the method, the truncated information is introduced at the specific position, so that a defect that the real-time decoding may not be realized by a traditional attention model based on whole sentence modeling method may be avoided, an advantage of higher model accuracy may be achieved by the attention end-to-end modeling, thus improving a product performance of speech recognition greatly. The end-to-end speech recognition modeling method based on the truncation realizes a structural innovation of an end-to-end modeling technology for real-time continuous speech recognition of large-scale vocabulary for the first time.

In addition, some embodiments of the present disclosure also propose a streaming multi-layer truncated attention (SMLTA) model based on the CTC spiking information. The model uses a combination of the context-free syllables or high frequency phonemes as the basic acoustic modeling unit, and obtains the speech recognition performance exceeding that of a remarkable CTC model through a CTC and attention model joint modeling technology under a condition of training data for tens of thousands of hours. Compared with the traditional attention model which may only perform attention model modeling of each modeling unit after all the coded implicit features of the whole sentence are obtained, embodiments of the present disclosure innovatively proposes that an output result (also called the spike information) of the CTC model is utilized to truncate the continuously coded implicit feature sequence into the implicit feature subsequences, and the attention model modeling of each modeling unit is independently performed on only one independent implicit feature subsequence. Therefore, the model does not need to carry out the attention modeling on the coded implicit features within a range of the whole sentence length, the attention modeling process is constrained to be carried out on a small feature subsequence, such that the problem of poor accuracy of the traditional attention model carrying out the attention modeling within a large range is successfully solved. Meanwhile, since the spike information output by the CTC model is sequentially streamed from left to right, the subsequence is also sequentially streamed from left to right, and finally the SMLTA model of the present disclosure may also be streamed from left to right.

Accordingly, embodiments of the present disclosure have the following advantages compared to the conventional speech recognition technology or model.

Compared with the traditional CTC model, embodiments of the present disclosure effectively realizes the joint modeling of the acoustic model and the language model through a method of the CTC and attention joint training, overcomes the defect that the traditional CTC model may only model the acoustic model, and improves a robustness of the speech recognition system in a complex environment. In addition, since the CTC model has the insertion and deletion errors, there may be an error in the information provided to the attention model by the CTC model. Therefore, the embodiments of the present disclosure effectively solve deficiencies of the CTC model through a two-layer attention structure, significantly improving the performance of the speech recognition.

Compared with the traditional attention model, some embodiments of the present disclosure use the attention model which uses the truncated information of the speech signal to truncate, so as to avoid the problem that the speech recognition system constructed by the traditional attention model may not decode in real time, and meet the requirement of the user on a response speed of the system. In addition, compared with the low recognition accuracy rate the traditional attention model for the long sentence, embodiments of the present disclosure utilizes the truncated information, concentrates the attention modeling process of each modeling unit on each feature subsequence for modeling, thus improving the modeling accuracy of the attention model, and solving the problem of poor modeling accuracy of the attention model in a large range.

Compared with the conventional attention model supporting the fixed-length segmentation, the feature subsequence is obtained by truncating the information in embodiments of the present disclosure, such that the required feature subsequence may be more accurately obtained than the fixed-length segmentation. In addition, some embodiments of the present disclosure achieve overlapping of the feature subsequences through two layers of attention structure, enabling more efficient filtering of the features, thereby achieving performance with modeling accuracy that exceeds that of the whole sentence attention method.

In addition, the most compact CTC and attention-integrated truncated attention model proposed according to some embodiments of the present disclosure possesses both the CTC head and the attention head, and the training is performed with both heads. The head of the CTC is trained by the loss function of the CTC, the head of attention is trained by the cross entropy loss function, and the two loss functions are connected by the linear difference weight. The model is almost the same as the conventional model in the on-line computation amount, so that an extra calculation cost is avoided, and the requirement of large-scale industrial deployment may be met.

FIG. 7 illustrates a block diagram of a real-time speech recognition apparatus 700 based on truncated attention according to embodiments of the present disclosure. As illustrated in FIG. 7, the apparatus 700 includes a truncated information obtaining module 710, a feature sequence truncation module 720, and a recognition result obtaining module 730. The truncated information obtaining module 710 is configured to obtain truncated information for truncating a feature sequence of a speech signal based on the speech signal. The feature sequence truncation module 720 is configured to truncate the feature sequence into a plurality of subsequences based on the truncated information. The recognition result obtaining module 730 is configured to obtain a real-time recognition result through an attention mechanism for a subsequence in the plurality of subsequences.

In some embodiments, the truncated information obtaining module 710 includes: a spike information obtaining module configured to obtain spike information related to the speech signal by performing a connectionist temporal classification (CTC) process on the feature sequence; and a truncated information determination module configured to determine the truncated information based on the obtained spike information.

In some embodiments, the recognition result obtaining module 730 includes: a first attention modeling means configured to perform a first attention modeling of an attention model on a first subsequence in the plurality of subsequences, the attention model enabling a weighted feature selection; and a second attention modeling means configured to perform a second attention modeling of the attention model on a second subsequence in the plurality of subsequences, the first attention modeling being different from the second attention modeling.

In some embodiments, the apparatus 700 includes: a shared encoder configured to encode the speech signal into the feature sequence; a connectionist temporal classification (CTC) module configured to obtain the spike information based on the feature sequence; and an attention decoder configured to obtain the real-time recognition result based on the feature sequence and the spike information. The shared encoder is shared by the CTC module and the attention decoder, and the truncated information obtaining module 710 is included in the CTC module, and the feature sequence truncation module 720 and the recognition result obtaining module 730 are included in the attention decoder.

In some embodiments, the apparatus 700 further includes: a first loss function determination module configured to determine a first loss function for training the connectionist temporal classification (CTC) module; a second loss function determination module configured to determine a second loss function for training the attention decoder; and a training module configured to train the connectionist temporal classification (CTC) module and the attention decoder together using the first loss function and the second loss function.

In some embodiments, the feature sequence truncation module 720 includes a subsequence selection module configured to, for each spike in the spike information, select from the feature sequence a subsequence corresponding to a predetermined number of spikes adjacent to the spike, the predetermined number of spikes including a first number of spikes before the spike and a second number of spikes after the spike.

In some embodiments, the recognition result obtaining module 730 includes: a plurality of feature vector determination modules configured to determine a plurality of feature vectors through a first-layer attention mechanism respectively based on a plurality of overlapped subsequences in the feature sequence; a context feature vector determination module configured to determine a context feature vector through a second-layer attention mechanism based on the plurality of determined feature vectors; and a recognition result determination module configured to determine the real-time recognition result based on the determined context feature vector.

In some embodiments, where the feature sequence is an implicit feature sequence, and each spike indicates a syllable or a set of phonemes.

It should be understood that the truncated information obtaining module 710, the feature sequence truncation module 720, and the recognition result obtaining module 730 illustrated in FIG. 7 may be included in a single electronic device or multiple electronic devices. Moreover, it should be understood that the modules illustrated in FIG. 7 may perform steps or actions in the method or process that references embodiments of the present disclosure.

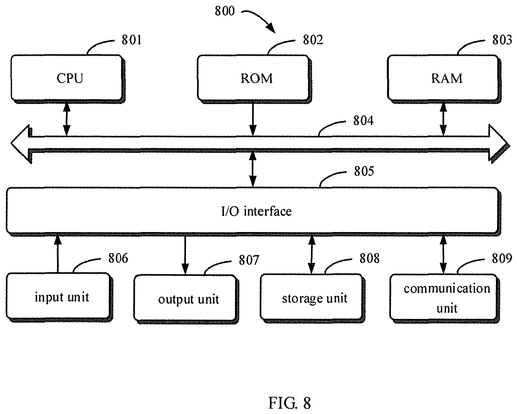

Fig. 8 is a block diagram illustrating an example device 800 capable of implementing some embodiments of the present disclosure. It should be understood that, the device 800 may be used to implement the real-time speech recognition apparatus 700 based on truncated attention according to embodiments of the present disclosure, or the user device 220, or the server 230. As illustrated in the figure, the device 800 includes a central processing unit (CPU) 801, which can perform various appropriate actions and processing according to computer program instructions stored in a read-only memory (ROM) 802 or loaded from a memory unit 808 to a random access memory (RAM) 803. In the RAM 803, various programs and data needed for the operation of the device 800 may also be stored. The CPU 801, the ROM 802, and the RAM 803 are connected to each other via a bus 804. An Input/output (I/O) interface 805 is also connected to the bus 804.

A plurality of components in the device 800 are connected to the I/O interface 805, including: an input unit 806, such as a keyboard, a mouse, and the like; an output unit 807, such as various types of monitors, speakers, and the like; a storage unit 808, such as a disk, a CD, and the like; and a communication unit 809, such as a network card, a modem, a wireless communication transceiver, and the like. The communication unit 809 allows the devices 800 to exchange information/data with other devices through computer networks such as the Internet and/or various telecommunications networks.

The various procedures and processing described above, such as the method 300, can be performed by the processing unit 801. For example, in some embodiments, the method 300 may be implemented as computer software programs physically contained in a machine-readable medium, such as the storage unit 808. In some embodiments, part or all of the computer programs may be loaded and/or installed on the device 800 via the ROM 802 and/or the communication unit 809. When the computer programs are loaded into the RAM 803 and executed by the CPU 801, one or more steps of the method 300 described above can be performed. Alternatively, in other embodiments, the CPU 801 may be configured to execute the method 300 by any other appropriate means (for example, by means of firmware).

The functions described above may be performed at least in part by one or more hardware logic components. For example, without limitation, exemplary types of hardware logic components may include: the field programmable gate array (FPGA), the application specific integrated circuit (ASIC), the application specific standard product (ASSP), the system on chip (SOC), the complex programmable logic device (CPLD), and the like.

The program codes for carrying out operations of embodiments of the present disclosure may be written in any combination of one or more programming languages. The program codes may be provided to processor or the controller of a general-purpose computer, a special purpose computer, or other programmable data-processing devices, such that when executed by the processor or controller, causes the functions/operations specified in the flowchart and/or the block diagram to be implemented. The program codes may be executed entirely on the machine, partially on the machine, as a separate software package, partially on the remote machine, or entirely on the remote machine or server.

In the context of the present disclosure, the machine-readable medium may be a tangible medium that may include or store programs that can be used by or in conjunction with the instruction execution system, apparatus, or device. The machine-readable medium may be the machine-readable signal medium or the machine-readable storage medium. The machine-readable medium may include, but is not limited to, an electrical, magnetic, optical, electromagnetic, infrared, or semiconductor system, apparatus, device, component or any combination thereof. More specific examples (a non-exhaustive list) of the computer readable storage medium include: an electrical connection having one or more wires, a portable computer disk, a hard disk, a random access memory (RAM), a read only memory (ROM), an Erasable Programmable Read Only Memory (EPROM) or a flash memory, an optical fiber, a compact disc read-only memory (CD-ROM), an optical memory component, a magnetic memory component, or any suitable combination thereof.

In addition, although acts or steps are described in the particular order, it should be understood that, such acts or steps that are required to be performed in the particular or sequence order shown, or that all illustrated acts or steps should be performed to achieve the desired results. Multitasking and parallel processing may be advantageous under certain circumstances. Similarly, although some implementation details are described above, these should not be construed as limiting the scope of the present disclosure. Certain features described in the context of the separate embodiment may also be implemented in combination in the single implementation. Instead, the various features described in the context of the single implementation may also be implemented in a plurality of implementations, either individually or in any suitable sub-combination.

Although embodiments of the present disclosure have been described in language specific to structural features and/or methodological acts, it should be understood that, the subject matter defined in the appended claims is not limited to the particular features or acts described above. Instead, the specific features and acts described above are merely exemplary forms of implementing the claims.

## Claims

1. A real-time speech recognition method based on truncated attention, comprising:
obtaining (302) truncated information for truncating a feature sequence of a speech signal based on the speech signal;
truncating (304) the feature sequence into a plurality of subsequences based on the truncated information;
obtaining (306) a real-time recognition result through an attention mechanism for a subsequence in the plurality of subsequences; **characterized in that**, obtaining (302) the truncated information for truncating the feature sequence of the speech signal comprises:
obtaining spike information related to the speech signal by performing a connectionist temporal classification, CTC, process on the feature sequence; and
determining the truncated information based on the obtained spike information, wherein truncating (304) the feature sequence into the plurality of subsequences comprises:
for each spike in the spike information, selecting from the feature sequence a subsequence corresponding to a predetermined number of spikes adjacent to the spike,
the predetermined number of spikes comprising a first number of spikes before the spike and a second number of spikes after the spike.

2. The method of claim 1, wherein obtaining (306) the real-time recognition result through the attention mechanism comprises:
performing a first attention modeling of an attention model on a first subsequence in the plurality of subsequences, the attention model enabling a weighted feature selection;
and
performing a second attention modeling of the attention model on a second subsequence in the plurality of subsequences, the first attention modeling being different from the second attention modeling.

3. The method of claim 1, wherein the speech signal is encoded into the feature sequence by a shared encoder; the spike information is obtained by a CTC module based on the feature sequence; and the real-time recognition result is obtained by an attention decoder based on the feature sequence and the spike information, the shared encoder being shared by the CTC module and the attention decoder.

4. The method of claim 3, further comprising:
determining a first loss function for training the CTC module;
determining a second loss function for training the attention decoder; and
training the CTC module and the attention decoder using the first loss function and the second loss function.

5. The method of claim 1, wherein obtaining (306) the real-time recognition result through the attention mechanism comprises:
determining a plurality of feature vectors through a first-layer attention mechanism respectively based on a plurality of overlapped subsequences in the feature sequence;
determining a context feature vector through a second-layer attention mechanism based on the plurality of determined feature vectors; and
determining the real-time recognition result based on the determined context feature vector.

6. The method of claim 1, wherein the feature sequence is an implicit feature sequence, and each spike indicates a syllable or a set of phonemes.

7. A real-time speech recognition apparatus (700) based on truncated attention, comprising:
a truncated information obtaining module (710), configured to obtain truncated information for truncating a feature sequence of a speech signal based on the speech signal;
a feature sequence truncation module (720), configured to truncate the feature sequence into a plurality of subsequences based on the truncated information; and
a recognition result obtaining module (730), configured to obtain a real-time recognition result through an attention mechanism for a subsequence in the plurality of subsequences; **characterized in that** the truncated information obtaining module (710) comprises:
a spike information obtaining module, configured to obtain spike information related to the speech signal by performing a connectionist temporal classification, CTC, process on the feature sequence; and
a truncated information determination module, configured to determine the truncated information based on the obtained spike information, wherein the feature sequence truncation module (720) comprises:
a subsequence selection module, configured to, for each spike in the spike information, select from the feature sequence a subsequence corresponding to a predetermined number of spikes adjacent to the spike, the predetermined number of spikes comprising a first number of spikes before the spike and a second number of spikes after the spike.

8. The apparatus (700) of claim 7, wherein the recognition result obtaining module (730) comprises:
a first attention modeling means, configured to perform a first attention modeling of an attention model on a first subsequence in the plurality of subsequences, the attention model enabling a weighted feature selection; and
a second attention modeling means configured to perform a second attention modeling of the attention model on a second subsequence in the plurality of subsequences, the first attention modeling being different from the second attention modeling.

9. The apparatus (700) of claim 7, comprising:
a shared encoder, configured to encode the speech signal into the feature sequence;
a CTC module, configured to obtain the spike information based on the feature sequence; and
an attention decoder, configured to obtain the real-time recognition result based on the feature sequence and the spike information, the shared encoder being shared by the CTC module and the attention decoder,
wherein the truncated information obtaining module is comprised in the CTC module,
and the feature sequence truncation module and the recognition result obtaining module are comprised in the attention decoder.

10. The apparatus (700) of claim 9, further comprising:
a first loss function determination module, configured to determine a first loss function for training the CTC module;
a second loss function determination module, configured to determine a second loss function for training the attention decoder; and
a training module, configured to train the CTC module and the attention decoder using the first loss function and the second loss function.

11. A computer-readable storage medium, having stored thereon a computer program which, when executed by a processor, implements the method according to any one of claims 1-6.

## Patentansprüche

1. Echtzeitspracherkennungsverfahren auf der Basis von trunkierter Attention, folgende Schritte umfassend:
Erhalten (302) von trunkierter Information zur Trunkierung einer Merkmalssequenz eines Sprachsignals auf der Basis des Sprachsignals;
Trunkieren (304) der Merkmalssequenz in eine Vielzahl von Teilsequenzen auf der Basis der trunkierten Information;
Erhalten (306) eines Echtzeiterkennungsergebnisses durch einen Attentionmechanismus für eine Teilsequenz in der Vielzahl von Teilsequenzen;
**dadurch gekennzeichnet, dass** das Erhalten (302) der trunkierten Information zur Trunkierung der Merkmalssequenz des Sprachsignals folgende Schritte umfasst:
Erhalten einer Spitzen-Information in Bezug auf das Sprachsignal durch das Durchführen eines Prozesses einer konnektionistischen zeitlichen Klassifizierung, CTC [englisch: connectionist temporal classification], an der Merkmalssequenz; und
Bestimmen der trunkierten Information auf der Basis der erhaltenen Spitzen-Information, wobei das Trunkieren (304) der Merkmalssequenz in die Vielzahl von Teilsequenzen folgenden Schritt umfasst:
für jede Spitze in der Spitzen-Information, Auswählen einer Teilsequenz, die einer zu der Spitze benachbarten vorbestimmten Anzahl Spitzen entspricht, aus der Merkmalssequenz,
wobei die vorbestimmte Anzahl Spitzen eine erste Anzahl Spitzen vor der Spitze und eine zweite Anzahl Spitzen nach der Spitze umfasst.

2. Verfahren nach Anspruch 1, wobei das Erhalten (306) des Echtzeiterkennungsergebnisses durch den Attentionmechanismus folgende Schritte umfasst:
Durchführen einer ersten Attentionmodellierung eines Attentionmodells an einer ersten Teilsequenz in der Vielzahl von Teilsequenzen, wobei das Attentionmodell eine gewichtete Merkmalsauswahl ermöglicht, und
Durchführen einer zweiten Attentionmodellierung des Attentionmodells an einer zweiten Teilsequenz in der Vielzahl von Teilsequenzen, wobei sich die erste Attentionmodellierung von der zweiten Attentionmodellierung unterscheidet.

3. Verfahren nach Anspruch 1, wobei das Sprachsignal durch einen gemeinsamen Kodierer in die Merkmalssequenz kodiert wird, wobei die Spitzen-Information von einem CTC-Modul auf der Basis der Merkmalssequenz erhalten wird; und wobei das Echtzeiterkennungsergebnis von einem Attentiondekodierer auf der Basis der Merkmalssequenz und der Spitzen-Information erhalten wird, wobei der gemeinsame Kodierer von dem CTC-Modul und dem Attentiondekodierer geteilt wird.

4. Verfahren nach Anspruch 3, des Weiteren folgende Schritte umfassend:
Bestimmen einer ersten Verlustfunktion zum Trainieren des CTC-Moduls;
Bestimmen einer zweiten Verlustfunktion zum Trainieren des Attentiondekodierers; und
Trainieren des CTC-Moduls und des Attentiondekodierers unter Verwendung der ersten Verlustfunktion und der zweiten Verlustfunktion.

5. Verfahren nach Anspruch 1, wobei das Erhalten (306) des Echtzeiterkennungsergebnisses durch den Attentionmechanismus folgende Schritte umfasst:
Bestimmen einer Vielzahl von Merkmalsvektoren durch einen Attentionmechanismus der ersten Schicht jeweils auf der Basis einer von einer Vielzahl von überlappenden Teilsequenzen in der Merkmalssequenz;
Bestimmen eines Kontextmerkmalsvektors durch einen Attentionmechanismus der zweiten Schicht auf der Basis der Vielzahl der bestimmten Merkmalsvektoren; und Bestimmen des Echtzeiterkennungsergebnisses auf der Basis des bestimmten Kontextmerkmalsvektors.

6. Verfahren nach Anspruch 1, wobei die Merkmalssequenz eine Sequenz impliziter Merkmale ist und wobei jede Spitze eine Silbe oder einen Satz Phoneme anzeigt.

7. Echtzeiterkennungsvorrichtung (700) auf der Basis von trunkierter Attention, Folgendes umfassend:
ein Modul zum Erhalt von trunkierter Information (710), das dazu ausgebildet ist, trunkierte Information zur Trunkierung einer Merkmalssequenz eines Sprachsignals auf der Basis des Sprachsignals zu erhalten;
ein Merkmalssequenztrunkierungsmodul (720), das dazu ausgebildet ist, die Merkmalssequenz auf der Basis der trunkierten Information in eine Vielzahl von Teilsequenzen zu trunkieren; und
Modul zum Erhalt eines Erkennungsergebnisses (730), das dazu ausgebildet ist, ein Echtzeiterkennungsergebnis durch einen Attentionmechanismus für eine Teilsequenz in der Vielzahl von Teilsequenzen zu erhalten; **dadurch gekennzeichnet, dass** das Modul zum Erhalt von trunkierter Information (710) Folgendes umfasst:
Modul zum Erhalt von Spitzen-Information, das dazu ausgebildet ist, eine Spitzen-Information in Bezug auf das Sprachsignal durch das Durchführen eines Prozesses einer konnektionistischen zeitlichen Klassifizierung, CTC [englisch: connectionist temporal classification], an der Merkmalssequenz zu erhalten; und
Modul zur Bestimmung von trunkierter Information, das dazu ausgebildet ist, die trunkierte Information auf der Basis der erhaltenen Spitzen-Information zu bestimmen, wobei das Merkmalssequenztrunkierungsmodul (720) Folgendes umfasst:
ein Teilsequenzauswahlmodul, das dazu ausgebildet ist, für jede Spitze in der Spitzen-Information, eine Teilsequenz, die einer zu der Spitze benachbarten vorbestimmten Anzahl Spitzen entspricht, aus der Merkmalssequenz auszuwählen, wobei die vorbestimmte Anzahl Spitzen eine erste Anzahl Spitzen vor der Spitze und eine zweite Anzahl Spitzen nach der Spitze umfasst.

8. Vorrichtung (700) nach Anspruch 7, wobei das Modul zum Erhalt eines Erkennungsergebnisses (730) Folgendes umfasst:
eine Einrichtung zur ersten Attentionmodellierung, die dazu ausgebildet ist, eine erste Attentionmodellierung eines Attentionmodells an einer ersten Teilsequenz in der Vielzahl von Teilsequenzen durchzuführen, wobei das Attentionmodell eine gewichtete Merkmalsauswahl ermöglicht; und
eine Einrichtung zur zweiten Attentionmodellierung, die dazu ausgebildet ist, eine zweite Attentionmodellierung des Attentionmodells an einer zweiten Teilsequenz in der Vielzahl von Teilsequenzen durchzuführen, wobei sich die erste Attentionmodellierung von der zweiten Attentionmodellierung unterscheidet.

9. Vorrichtung (700) nach Anspruch 7, Folgendes umfassend:
einen gemeinsamen Kodierer, der dazu ausgebildet ist, das Sprachsignal in die Merkmalssequenz zu kodieren;
ein CTC-Modul, das dazu ausgebildet ist, die Spitzen-Information auf der Basis der Merkmalssequenz zu erhalten; und
einen Attentiondekodierer, der dazu ausgebildet ist, das Echtzeiterkennungsergebnis auf der Basis der Merkmalssequenz und der Spitzen-Information zu erhalten, wobei der gemeinsame Kodierer von dem CTC-Modul und dem Attentiondekodierer geteilt wird,
wobei das Modul zum Erhalt von trunkierter Information in dem CTC-Modul umfasst ist und wobei das Merkmalssequenztrunkierungsmodul und das Modul zum Erhalt eines Erkennungsergebnisses in dem Attentiondekodierer umfasst sind.

10. Vorrichtung (700) nach Anspruch 9, des Weiteren Folgendes umfassend:
ein Bestimmungsmodul einer ersten Verlustfunktion, das dazu ausgebildet ist, eine erste Verlustfunktion zum Trainieren des CTC-Moduls zu bestimmen;
ein Bestimmungsmodul einer zweiten Verlustfunktion, das dazu ausgebildet ist, eine zweite Verlustfunktion zum Trainieren des Attentiondekodierers zu bestimmen; und
Trainiermodul, das dazu ausgebildet ist, das CTC-Modul und den Attentiondekodierer unter Verwendung der ersten Verlustfunktion und der zweiten Verlustfunktion zu trainieren.

11. Computerlesbares Speichermedium mit einem darauf gespeicherten Computerprogramm, das, wenn es durch einen Prozessor ausgeführt wird, das Verfahren nach einem der Ansprüche 1 bis 6 durchführt.

## Revendications

1. Procédé de reconnaissance de parole en temps réel sur la base d'attention tronquée, le procédé comprenant les étapes suivantes :
obtenir (302) une information tronquée pour tronquer une séquence de caractéristiques d'un signal de parole sur la base du signal de parole ;
tronquer (304) la séquence de caractéristiques en une pluralité de sous-séquences sur la base de l'information tronquée ;
obtenir (306) un résultat de reconnaissance en temps réel par un mécanisme d'attention pour une sous-séquence dans la pluralité de sous-séquences ;
**caractérisé en ce que** l'étape consistant à obtenir (302) l'information tronquée pour tronquer la séquence de caractéristiques du signal de parole comprend les étapes suivantes :
obtenir une information de pointes concernant le signal de parole en effectuant un processus de classification temporelle connexionniste, CTC, sur la séquence de caractéristiques ; et
déterminer l'information tronquée sur la base de l'information de pointes obtenue, dans lequel l'étape consistant à tronquer (304) la séquence de caractéristiques en la pluralité de sous-séquences comprend l'étape suivante :
pour chaque pointe dans l'information de pointes, sélectionner de la séquence de caractéristiques une sous-séquence qui correspond à un nombre de pointes prédéterminé adjacent à la pointe,
le nombre de pointes prédéterminé comprenant un premier nombre de pointes avant la pointe et un deuxième nombre de pointes après la pointe.

2. Procédé selon la revendication 1, dans lequel l'étape consistant à obtenir (306) le résultat de reconnaissance en temps réel par le mécanisme d'attention comprend les étapes suivantes :
effectuer une première modélisation d'attention d'un modèle d'attention sur une première sous-séquence dans la pluralité de sous-séquences, le modèle d'attention permettant une sélection de caractéristiques pondérées ; et
effectuer une deuxième modélisation d'attention du modèle d'attention sur une deuxième sous-séquence dans la pluralité de sous-séquences, la première modélisation d'attention étant différente de la deuxième modélisation d'attention.

3. Procédé selon la revendication 1, dans lequel le signal de parole est encodé dans la séquence de caractéristiques par un encodeur partagé ; dans lequel l'information de pointes est obtenue par un module CTC sur la base de la séquence de caractéristiques ; et dans lequel le résultat de reconnaissance en temps réel est obtenu par un décodeur d'attention sur la base de la séquence de caractéristiques et l'information de pointes, l'encodeur partagé étant partagé par le module CTC et le décodeur d'attention.

4. Procédé selon la revendication 3, comprenant en outre les étapes suivantes :
déterminer une première fonction de perte pour entraîner le module CTC ;
déterminer une deuxième fonction de perte pour entraîner le décodeur d'attention ; et
entraîner le module CTC et le décodeur d'attention en utilisant la première fonction de perte et la deuxième fonction de perte.

5. Procédé selon la revendication 1, dans lequel l'étape consistant à obtenir (306) le résultat de reconnaissance en temps réel par le mécanisme d'attention comprend les étapes suivantes :
déterminer une pluralité de vecteurs de caractéristiques par un mécanisme d'attention de la première couche respectivement sur la base d'une pluralité de sous-séquences chevauchées dans la séquence de caractéristiques ;
déterminer un vecteur de caractéristiques de contexte par un mécanisme d'attention de la deuxième couche sur la base de la pluralité de vecteurs de caractéristiques déterminés ; et
déterminer le résultat de reconnaissance en temps réel sur la base du vecteur de caractéristiques de contexte déterminé.

6. Procédé selon la revendication 1, dans lequel la séquence de caractéristiques est une séquence de caractéristiques implicites et dans lequel chaque pointe indique une syllabe ou un ensemble de phonèmes.

7. Dispositif (700) de reconnaissance de parole en temps réel sur la base d'attention tronquée, comprenant :
un module (710) d'obtention d'une information tronquée configuré pour obtenir une information tronquée pour tronquer une séquence de caractéristiques d'un signal de parole sur la base du signal de parole ;
un module (720) de troncature de séquences de caractéristiques configuré pour tronquer la séquence de caractéristiques en une pluralité de sous-séquences sur la base de l'information tronquée ; et
un module (730) d'obtention d'un résultat de reconnaissance configuré pour obtenir un résultat de reconnaissance en temps réel par un mécanisme d'attention pour une sous-séquence dans la pluralité de sous-séquences ;
**caractérisé en ce que** module (710) d'obtention d'une information tronquée comprend :
un module d'obtention d'une information de pointes configuré pour obtenir une information de pointes concernant le signal de parole en effectuant un processus de classification temporelle connexionniste, CTC, sur la séquence de caractéristiques ; et
un module de détermination d'une information tronquée configuré pour déterminer l'information tronquée sur la base de l'information de pointes obtenue, dans lequel le module (720) de troncature de séquences de caractéristiques comprend :
un module de sélection de sous-séquences configuré pour sélectionner de la séquence de caractéristiques, pour chaque pointe dans l'information de pointes, une sous-séquence qui correspond à un nombre de pointes prédéterminé adjacent à la pointe, le nombre de pointes prédéterminé comprenant un premier nombre de pointes avant la pointe et un deuxième nombre pointes après la pointe.

8. Dispositif (700) selon la revendication 7, dans lequel le module (730) d'obtention d'un résultat de reconnaissance comprend :
un moyen d'une première modélisation d'attention configuré pour effectuer une première modélisation d'attention d'un modèle d'attention sur une première sous-séquence dans la pluralité de sous-séquences, le modèle d'attention permettant une sélection de caractéristiques pondérées ; et
un moyen d'une deuxième modélisation d'attention configuré pour effectuer une deuxième modélisation d'attention du modèle d'attention sur une deuxième sous-séquence dans la pluralité de sous-séquences, la première modélisation d'attention étant différente de la deuxième modélisation d'attention.

9. Dispositif (700) selon la revendication 7, comprenant :
un encodeur partagé configuré pour encoder le signal de parole dans la séquence de caractéristiques ;
un module CTC configuré pour obtenir l'information de pointes sur la base de la séquence de caractéristiques ; et
un décodeur d'attention configuré pour obtenir le résultat de reconnaissance en temps réel sur la base de la séquence de caractéristiques et l'information de pointes, l'encodeur partagé étant partagé par le module CTC et le décodeur d'attention,
dans lequel le module d'obtention d'une information tronquée est compris dans le module CTC et dans lequel le module de troncature de séquences de caractéristiques et le module d'obtention d'un résultat de reconnaissance est compris dans le décodeur d'attention.

10. Dispositif (700) selon la revendication 9, comprenant en outre :
un module de détermination d'une première fonction de perte configuré pour déterminer une première fonction de perte pour entraîner le module CTC ;
un module de détermination d'une deuxième fonction de perte configuré pour déterminer une deuxième fonction de perte pour entraîner le décodeur d'attention ; et
un module d'entraînement configuré pour entraîner le module CTC et le décodeur d'attention en utilisant la première fonction de perte et la deuxième fonction de perte.

11. Support de stockage lisible par ordinateur ayant stocké sur celui-ci un programme d'ordinateur qui, lorsqu'il est exécuté par un processeur, met en oeuvre le procédé selon l'une quelconque des revendications 1 à 6.
